# EUROPÄISCHE PATENTSCHRIFT

(11) **EP 1 940 542 B1**
(45) Veröffentlichungstag und Bekanntmachung des Hinweises auf die Patenterteilung: **06.01.2010**
(21) Anmeldenummer: 06807368.3
(22) Anmeldetag: 18.10.2006
(51) Int. Cl.: B01J 10/00, B01J 8/02

(54) **ROHRBÜNDELREAKTOR MIT EINER VERTEILERVORRICHTUNG FÜR EIN GAS-FLÜSSIGPHASENGEMISCH**
TUBE BUNDLE REACTOR WITH A DISTRIBUTION DEVICE FOR A GAS-LIQUID PHASE MIXTURE
REACTEUR A FAISCEAU DE TUBES AVEC UN DISPOSITIF REPARTITEUR DE MELANGE DE PHASES GAZEUSE ET LIQUIDE

(30) Priorität: 20.10.2005 DE 102005050283
(43) Veröffentlichungstag der Anmeldung: 09.07.2008
(73) Patentinhaber: BASF SE, 67056 Ludwigshafen (DE)
(72) Erfinder: GERLINGER, Wolfgang, 67117 Limburgerhof (DE); MATTKE, Torsten, 67251 Freinsheim (DE); BEY, Oliver, 67150 Niederkirchen (DE)
(74) Vertreter: Isenbruck, Günter
(86) Internationale Anmeldenummer: PCT/EP2006/067531
(87) Internationale Veröffentlichungsnummer: WO 2007/045666

(56) Entgegenhaltungen:
- WO-A-00/61706
- GB-A- 2 148 141
- US-A- 3 197 286
- US-A1- 2003 223 924

## Beschreibung

Die Erfindung betrifft einen Rohrbündelreaktor mit einer Verteilervorrichtung für ein Gas-Flüssigphasengemisch zur gleichmäßigen Verteilung einer Gas- und einer Flüssigphase über den Querschnitt des Rohrbündelreaktors.

Bei chemischen Prozessen ist es häufig erforderlich, eine Gas- und eine Flüssigphase, insbesondere in Form eines Gas-Flüssigphasengemisches, in einen Apparat über mindestens eine Zuführöffnung einzuleiten, deren hydraulischer Durchmesser im Vergleich zum hydraulischen Durchmesser des Apparates kleiner sein kann. Bedingt durch die hydraulischen Durchmesserverhältnisse und die damit einhergehenden Strömungsverhältnisse sowie dem herrschenden Dichteunterschied zwischen Gas- und Flüssigphase kommt es insbesondere zu einer ungleichmäßigen Verteilung der Gasphase über den Querschnitt des Apparates. Dies führt zu Problemen, vor allem wenn im Apparat ein kontinuierliches Festbett angeordnet ist, oder aber mit Feststoffpartikeln, beispielsweise Katalysatoren, gefüllte Kontaktrohre oder Spalten zwischen Thermoblechplatten vorhanden sind. Aber auch schon in der Zuführung kann es durch entsprechende Strömungsverhältnisse zu einer gewissen Trennung von Gas- und Flüssigphase oder auch zu einer ungleichförmigen Einleitung von Gas- und Flüssigphase kommen, die eine Vergleichmäßigung des Einleitungsstromes notwendig machen.

Darüber hinaus erweist sich das Zuführen eines zweiphasigen Gemisches und eine gleichmäßige Verteilung desselben über den Querschnitt des Apparates als problematisch, da durch eine Veränderung in der Gas-Flüssigverteilung oder in der Komponentenzusammensetzung in den zwei Phasen ein zusätzlicher Freiheitsgrad in dem zweiphasigen Gemisch vorliegt. So kann eine ungleichmäßige Verteilung der Phasen zu einer Verschiebung des Gleichgewichtes und somit zu einer lokalen Veränderung der Komponentenzusammensetzung der einzelnen Phasen führen. Beispielsweise kann es in den Randgebieten, die von der Gasphase nur unzureichend erreicht werden, zum Verdampfen einer Komponente aus der Flüssigphase kommen, so dass diese an dieser Komponente verarmt.

Apparate für chemische Reaktionen, in denen ein Gas-Flüssigphasengemisch eingeleitet wird, weisen unter anderem einen zentralen, zylinderförmigen oder prismatischen Teil auf, in dem die chemische Reaktion stattfindet. Gegebenenfalls wird die chemische Reaktion katalysiert, wobei in dem Apparat ein kontinuierliches Festbett, mit Katalysatoren oder Katalysatorpartikeln gefüllte Kontaktrohre oder Thermoblechplatten mit dazwischen angeordneten Spalten vorgesehen ist. An beiden Enden ist der Apparat durch Deckel oder Böden geschlossen, die beispielsweise flach oder gewölbt, in Form von Klöpperböden, Korbbogenböden oder Kugelschalen ausgebildet sind.

Im Bereich eines unteren Bodens werden eine Gas- und eine Flüssigphase über mindestens eine Zuführöffnung einer Zuführeinrichtung in den Apparat eingeleitet. Beim Eintreten eines Gas-Flüssigphasengemisches durch die Zuführöffnung in den Innenraum des Apparates kann es dort durch Koaleszenz der Gasphase zur Ausbildung großer Gasblasen oder eines Gasstrahls kommen, die zentral aufsteigen und gegebenenfalls auf die Oberfläche eines Festbettes beziehungsweise eines Rohrbodens prallen, in dem die Kontaktrohre angeordnet sind. Im Gegensatz dazu werden die äußeren Bereiche des Apparats von der Gasphase nur unzureichend erreicht, wodurch es dort zu einer ungleichmäßigen Verteilung kommt. Unter Umständen findet zusätzlich ein Phasenübergang einer oder mehrerer Komponenten statt, und damit ergibt sich ein lokal verändertes Gleichgewicht. Dies bedingt in dem Apparat eine Uneinheitlichkeit in den Reaktionsbedingungen, wodurch die chemische Reaktion nicht optimal verläuft. Aber auch schon in der Zuführung kann es zu einer ungleichmäßigen Verteilung der beiden Phasen kommen. Darüber hinaus führen unterschiedlich große Gasblasen zu einer unerwünschten ungleichmäßigen Verteilung der beiden Phasen über den Apparatequerschnitt.

Um eine Vergleichmäßigung der Verteilung des Gas-Flüssigphasengemisches zu erzielen und um die beschriebenen Probleme zu vermeiden, ist es notwendig, Verteilervorrichtungen im Bereich der Zuführöffnung einzusetzen.

Aus US-A-6 029 956 ist für Blasensäulen bekannt, welche mit einer Flüssigphase beaufschlagt sind, die zugeführte Gasphase an Sinterplatten oder Lochplatten in die Flüssigphase zu dispergieren. Hierfür bildet die schneller aufsteigende Gasphase ein Gaspolster unterhalb der Einbauten, wodurch die Flüssigphase an der Sinter- oder Lochplatte vorbei strömt. An der Platte dispergiert die Gasphase in die Flüssigphase durch weitgehend gleichmäßig verteilte Durchgangsöffnungen. Übertragen auf ein System, in dem ein Zweiphasengemisch zugeführt wird, ergibt sich der Nachteil, dass aufgrund unbekannten Separations- und Koaleszenzverhaltens und des herrschenden Strömungsverhältnisses die Auftrennung der beiden Phasen nicht vollständig sein kann. Darüber hinaus muss den beiden Phasen stromaufwärts im Apparat ein Raum zur Verfügung gestellt werden, um eine Vergleichmäßigung der Verleitung zu gewährleisten.

Im Gegensatz dazu steht ein sich über den gesamten Querschnitt des Apparates erstreckender Siebboden, an dem sowohl die Gasphase als auch die Flüssigphase durch gleiche Öffnungen des Siebbodens gleichmäßig über den Apparatequerschnitt dispergieren. Ein derartiger Siebboden erzeugt einen hohen Druckverlust in dem Apparat, wodurch die Betriebskosten sich erhöhen. Allerdings hat sich gezeigt, dass ein Siebboden ungeeignet ist, um ein mehrphasiges Gemisch zu vergleichmäßigen. Ein Einsatz in Apparaten mit einem Festbett, erschwert den Zugriff auf das dahinter liegende Festbett, der insbesondere notwendig sein kann, um im Falle eines Katalysatorfestbettes den verbrauchten Katalysator auszutauschen.

Ringverteiler, die in einem Rohrboden untergebracht sind und eine Vielzahl von Öffnungen zur Vergleichmäßigung einer Verteilung aufweisen, benötigen ein großes Einbauvolumen, da für eine gleichmäßige Verteilung mehrere Ringe mit einer großen Anzahl von Öffnungen notwendig sind. Als problematisch erweist sich, dass innerhalb des Ringverteilers eine einheitliche Strömung des Zweiphasengemisches gewährleistet sein muss, um keine Verschiebung der Gas- Flüssigverteilung über den Strömungsquerschnitt zu erzeugen.

Aus US-A 3,197,286 ist für einen Apparat mit einem Partikelbett eine Verteilervorrichtung für ein Gas-Flüssigphasengemisch bekannt. Die Verteilervorrichtung umfasst einen horizontalen Boden und daran angeordnete vertikale, sich nach unten erstreckende Rohrelemente, welche vertikal untereinander angeordnete Öffnungen umfasst. Das untere Ende der Rohrelemente mündet in einen Bereich im Flüssig-Gasphasengemisch enthaltend und stellt für das Gas-Flüssigphasengemisch einen gemeinsamen Strömungsweg bereit.

Dem gegenüber ist es Aufgabe der vorliegenden Erfindung, einen Rohrbündelreaktor mit einer Verteilervorrichtung für eine Gas- und eine Flüssigphase zur Verfügung zu stellen, um eine über den gesamten Querschnitt des Rohrbündelreaktors gleichmäßige Verteilung zu erreichen, welche unabhängig von deren Separations- und Koaleszenzverhalten sowie dem herrschenden Strömungsverhältnissen ist. Insbesondere soll eine gleichförmige Verteilung über den gesamten Querschnitt des Rohrbündelreaktors bei einer konstanten Zusammensetzung der Phasen gewährleistet sein, wobei die Verteilervorrichtung konstruktiv einfach und entsprechend kostengünstig sein soll.

Die Aufgabe wird durch einen Rohrbündelreaktor mit Kontaktrohren und einer Verteilervorrichtung für ein Gas- Flüssigphasengemisch gelöst, wobei eine Gas- und eine Flüssigphase über mindestens eine Zuführöffnung in der unteren Haube des Rohrbündelreaktors geleitet wird, dadurch gekennzeichnet, dass die Verteilervorrichtung einen horizontalen Boden umfasst, der einem Rohrboden des Rohrbündelreaktors entspricht, an welchem sich die aufsteigende Gasphase zu einem Gaspolster aufstaut, und an dem Boden angeordnete vertikale, stromaufwärts offene Flüssigphasenführungselemente umfasst, die sich in Richtung der Zuführöffnung durch das sich ausbildende Gaspolster hinaus in die Flüssigphase erstrecken, wobei am Umfang der Flüssigphasenführungselemente mindestens eine Öffnung für die Gasphase im Bereich des sich ausbildenden Gaspolsters vorgesehen ist. Die vertikalen Flüssigphasenführungselemente sind als Verlängerung der Kontaktrohre ausgebildet.

Die Verteilervorrichtung findet Verwendung in einem Rohrbündelapparat, in dem eine Vielzahl von Kontaktrohren in Rohrböden eingeschweißt sind, wobei das Gas-Flüssigphasengemisch über eine Zuführöffnung in einer Haube zugeführt, beispielsweise durch die Kontaktrohre geleitet und über die andere Haube aus dem Apparat abgezogen wird.

Die bisher auftretende ungleichförmige Verteilung einer Gas- und Flüssigphase entsteht unter anderem dadurch, dass der hydraulische Durchmesser der Zuführöffnung um ein Vielfaches kleiner ist als der hydraulische Durchmesser des Apparates. Als "hydraulischer Durchmesser" wird in der Strömungstechnik das Verhältnis aus dem Vierfachen der Fläche zu dem Umfang einer Öffnung bezeichnet. Aufgrund des Dichteunterschieds zwischen Gasphase und Flüssigphase steigen die Gasblasen eines Zweiphasengemisches schneller auf, beziehungsweise durch Koaleszenzverhalten und/oder Strömungsverhältnissen an der Zuführöffnung bzw. in der Zuführung kann es zur Ausbildung von großen Gasblasen oder eines Gasstrahles kommen, so dass die Gasphase mit hoher Geschwindigkeit weitgehend zentral aufsteigt.

Eine erfindungsgemäß eingesetzte Verteilervorrichtung nutzt die durch die Dichte- und Strömungsverhältnisse hervorgerufene Separierung der Gas- und der Flüssigphase an der Verteilervorrichtung. Die Verteilervorrichtung umfasst einen horizontalen Boden, der beispielsweise als eine sich über den gesamten Querschnitt des Apparates erstreckende Platte ausgebildet sein kann. An diesem horizontalen Boden staut sich die Gasphase zu einem Gaspolster auf. An dem horizontalen Boden sind vertikale Flüssigphasenführungselemente angeordnet, beispielsweise gestaltet als sich nach unten in Richtung Zuführöffnung erstreckende Rohre, welche stromaufwärts eine Öffnung aufweisen. Die Länge der Rohre ist derart gewählt, dass sie die Höhe des sich ausbildenden Gaspolsters übersteigt und somit durch das aufgestaute Gaspolster in die Flüssigkeit reichen.

Jedes vertikale Flüssigphasenführungselement weist an seinem unteren Bereich vorzugsweise eine periphere Öffnung auf, durch welche die Flüssigphase strömen kann. Das untere Ende jedes vertikalen Flüssigphasenführungselementes kann vorzugsweise derart ausgebildet sein, dass die von der Zuführöffnung des Apparates in Form von Gasblasen oder Gasstrahlen aufsteigende Gasphase nicht direkt in das Innere strömen kann.

Die sich zu einem Gaspolster aufstauende Gasphase gelangt vorzugsweise über mindestens eine Öffnung am Umfang der einzelnen vertikalen Flüssigphasenführungselemente in Höhe des sich ausbildenden Gaspolsters in den im Innenraum vorliegenden Flüssigphasenstrom. Dadurch steht der Flüssigphase und der Gasphase im Innenraum der Flüssigphasenführungselemente ein gemeinsamer Strömungsweg zur Verfügung. Nach der anfänglichen Separierung von Gas- und Flüssigphase werden dadurch die beiden Phasen derart miteinander in Kontakt gebracht, dass sich eine gleichmäßige Verteilung einstellen kann. Eine Vielzahl entsprechender vertikaler Flüssigphasenführungselemente, gleichmäßig über den Querschnitt des Apparates verteilt, und welche Öffnungen stromaufwärts für die Zweiphasenströmung zur Verfügung stellen, gewährleistet eine Vergleichmäßigung der Verteilung des Gas-Flüssigphasengemisches über den Querschnitt des Apparates.

Die erfindungsgemäß eingesetzte Verteilervorrichtung umfasst einen horizontalen Boden, in welchen eine Vielzahl von Rohren eingesteckt oder eingeschweißt ist. Die Rohre erstrecken sich nach unten in Richtung der Zuführöffnung und weisen ein unteres verschlossenes Ende auf, wodurch eine direkte Anströmung der Gasphase nicht möglich ist. Eine Abdeckung des unteren Endes kann beispielsweise als Kappe, Glocke oder ähnliches ausgebildet sein. Rohre, welche in einem Randbereich des Apparates angeordnet sind und damit weitestgehend nicht im Anströmbereich der aufsteigenden Gasblasen liegen, können ohne Abdeckung ausgebildet sein, wodurch eine Platzersparnis erreicht wird. Die Abdeckung kann schräg ausgeführt sein, so dass herabfallende Katalysatorpartikel einer oberhalb angeordneten Katalysatorschüttung aus dem Rohr abgeführt werden können, ohne eine Verstopfung einer Öffnung hervorzurufen.

Die Höhe des sich ausbildenden Gaspolsters stellt sich in Abhängigkeit von dem herrschenden Druckverlust der Gasströmung durch die Verteilerplatte, dem Druckverlust der Flüssigphase und dem hydrostatischen Druckunterschied von Gas und Flüssigkeit ein. Je nach Dichteunterschied zwischen Gas- und Flüssigphase, Gasvolumenstrom bzw. Lastfall stellt sich demnach eine Höhe des Gaspolsters ein, die sich stark unterscheiden kann. Vorzugsweise sind die Rohre mit mehreren vertikal untereinander liegenden Öffnungen für die Gasphase versehen, durch welche je nach Höhe des Gaspolsters die Gasphase bzw. die Flüssigphase durchströmen.

Die für die Gasphase bereitgestellten vertikal untereinander liegenden Öffnungen können insbesondere unterschiedliche Durchmesser aufweisen. Sie liegen bevorzugt in einem Bereich von 1 mm bis 10 mm.

Die Rohre, die den gemeinsamen Strömungsweg von Flüssig- und Gasphase bereitstellen, können unterschiedliche Durchmesser haben.

Die erfindungsgemäß eingesetzte Verteilervorrichtung wird in einem als Rohrbündelreaktor ausgebildeten Apparat eingesetzt. In einem solchen Apparat sind Kontaktrohre in mindestens einem Rohrboden eingeschweißt und enthalten eine Katalysatorschüttung. Um eine gleichmäßige Beaufschlagung der einzelnen Kontaktrohre mittels der erfindungsgemäßen Verteilervorrichtung mit dem Gas-Flüssigphasengemisch zu erzielen, ist je ein als Rohr ausgebildetes Flüssigphasenführungselement der Verteilervorrichtung mindestens einem Kontaktrohr zugeordnet.

Damit die Höhe des sich ausbildenden Gaspolsters über den Querschnitt des Apparates möglichst konstant ist, wird der horizontale Boden der Verteilervorrichtung in dem Apparat nach Möglichkeit horizontal ausgerichtet.

Die erfindungsgemäß eingesetzte Verteilervorrichtung nutzt den unteren Rohrboden des als Rohrbündelreaktor ausgebildeten Apparates als horizontalen Boden der Verteilervorrichtung, an dem die Separierung von Gas- und Flüssigphase erfolgt. Die vertikalen Flüssigphasenführungselemente der Verteilervorrichtung, die entsprechend mit Öffnungen für die Flüssigphase und die Gasphase versehen sind, werden bevorzugt als Einsteckrohre der in dem Rohrboden eingeschweißten Kontaktrohre ausgebildet und stellen damit eine Verlängerung derselben dar. Jedes Einsteckrohr kann ein Rückhaltesieb enthalten, welches die Katalysatorpartikel trägt.

Durch umfangreiche Untersuchungen konnte gefunden werden, dass sich das Problem einer Ungleichmäßigkeit in der Verteilung eines Gas-Flüssigphasengemisches über den Querschnitt eines Apparates in einfacher Weise durch die oben definierte Verteilervorrichtung lösen lässt, wodurch Ungleichmäßigkeiten über den Querschnitt des Apparates sowohl bezüglich der Gasphase als auch bezüglich der Zusammensetzung der Phasen vermieden werden.

Die Erfindung wird im Folgenden anhand der Zeichnung näher erläutert.

Es zeigt im Einzelnen:
- Figur 1: einen Längsschnitt durch einen als Rohrbündelreaktor ausgebildeten Apparat mit einer Verteilervorrichtung in der unteren Haube gemäß dem Stand der Technik;
- Figur 2: ein Detail der Verteilervorrichtung von Figur 1;
- Figur 3: einen Längsschnitt einer erfindungsgemäß eingesetzten Verteilervorrichtung.

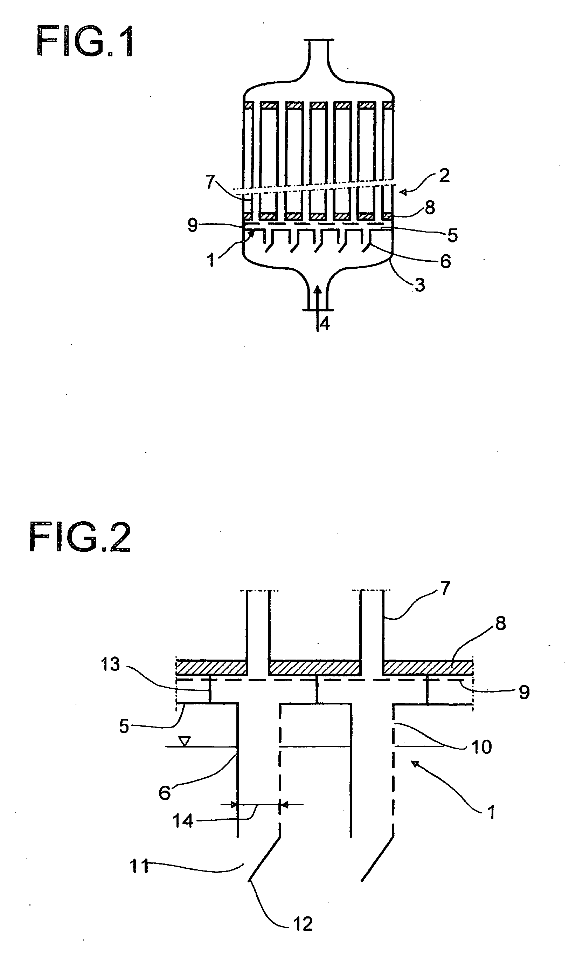

Die Längsschnittdarstellung in Figur 1 zeigt gemäß dem Stand der Technik einen Apparat 2 mit zentralem zylindrischem Teil, der an beiden Enden durch je eine halbkugelförmige Haube 3 abgeschlossen ist. Über eine Zuführöffnung 4, die in der Figur 1 dargestellten Ausführungsform beispielhaft in der unteren Haube 3 zentral angeordnet ist, wird ein Gas-Flüssigphasengemisch in den Apparat 2 in dessen untere Haube 3 eingeleitet und über eine Verteilervorrichtung 1 gleichmäßig verteilt. Die Verteilervorrichtung 1 umfasst einen horizontalen Boden 5 und eine Vielzahl von sich in Richtung Zuführöffnung 4 erstreckenden Flüssigphasenführungselementen 6, welche beispielsweise als Rohre ausgeführt sein können.

In der Figur 1 ist der Apparat 2 als Rohrbündelreaktor ausgebildet, mit einem zentralen zylinderförmigen Teil, in dem Kontaktrohre 7 in Rohrböden 8 angeordnet sind. Unterhalb des unteren Rohrbodens 8 ist ein Halterost 9 angeordnet. Die Verteilervorrichtung 1 ist derart in dem Apparat 2 angeordnet, dass ein Abstand zwischen dem horizontalen Boden 5 und dem unteren Rohrboden 8 besteht, insbesondere wenn ein Flüssigphasenführungselement 6 mehreren Kontaktrohren 7 zugeordnet ist.

Figur 2 zeigt ein Detail der Verteilervorrichtung von Figur 1. Die Verteilervorrichtung 1 umfasst einen horizontalen Boden 5, in dem sich nach unten erstreckende Flüssigphasenführungselemente 6 eingesteckt oder eingeschweißt sind. In vertikaler Richtung sind Öffnungen 10 an jedem Flüssigphasenführungselement 6 übereinander liegend angeordnet. Durch diese Öffnungen 10 dispergiert vorzugsweise die Gasphase, die sich zu einem Gaspolster unterhalb des horizontalen Bodens 5 aufgestaut hat. Zusätzlich umfasst jedes Flüssigphasenführungselement 6 eine Öffnung 11 an einem unteren Ende 12, durch die die Flüssigphase strömt. Je nach Lastfall ergibt sich unterhalb des horizontalen Bodens 5 eine unterschiedliche Höhe des aufgestauten Gaspolsters. Demnach strömt die Gasphase durch eine oder mehrere Öffnungen 10 des Flüssigphasenführungselements 6, wodurch die Flüssigphase sowohl durch die Öffnung 11 als auch entsprechend durch eine oder mehrere Öffnungen 10 treten kann.

Das untere Ende 12 jedes Flüssigphasenführungselementes 6 kann bevorzugt verschlossen sein, so dass die aufsteigende Gasphase nicht unmittelbar in den Innenraum des Flüssigphasenführungselementes 6 eintritt. Hierfür ist eine abgeschrägte Kappe vorgesehen, die es ermöglicht, dass herabfallende Katalysatorpartikel aus dem Flüssigphasenführungselement 6 austreten können ohne Öffnungen 10,11 zu verstopfen.

Der horizontale Boden 5 wird mittels von Abstandshaltern 13 an dem Rohrboden 8 befestigt, wodurch ebenfalls das Halterost 9 fixiert werden kann.

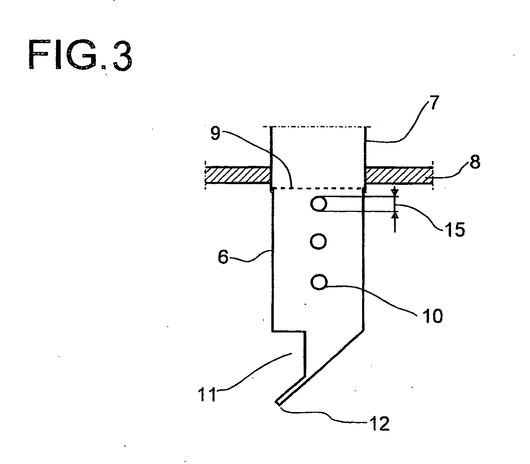

In Figur 3 ist eine erfindungsgemäß eingesetzte Verteilervorrichtung 1 dargestellt, wobei der Rohrboden 8, in dem die Kontaktrohre 7 eines als Rohrbündelreaktor ausgebildeten Apparates 2 eingeschweißt, eingesteckt oder eingeschraubt sind, als horizontaler Boden 5 fungiert, an dem die aufsteigende Gasphase zu einem Gaspolster aufgestaut wird. Jedem Kontaktrohr 7, ist ein als Rohr ausgebildetes Flüssigphasenführungselement 6 zugeordnet, welches in das Kontaktrohr 7 eingesteckt oder eingeschweißt werden kann. In jedem Flüssigphasenführungselement 6 ist ein Rückhalterost 9 angeordnet, auf welchem die Katalysatorpartikel liegen, mit denen die Kontaktrohre 7 gefüllt sind. An dem sich nach unten erstreckenden Abschnitt eines Flüssigphasenführungselementes 6 sind Öffnungen 10 vorgesehen, durch die die Gasphase dispergiert. Die Durchmesser 15 der untereinander liegenden Öffnungen 10 können bevorzugt unterschiedlich sein, wobei sie beispielsweise mit der Entfernung zum Rohrboden 8 abnehmen. Am unteren Ende 12 jedes Flüssigphasenführungselementes 6 ist eine Öffnung 11 für die Flüssigphase vorgesehen. Das untere Ende 12 ist nach unten hin abgedeckt, vorzugsweise mittels einer schrägen Kappe, wodurch herabfallende Katalysatorpartikel nach außen abgeführt werden und nicht Öffnungen 10, 11 verstopfen.

## Patentansprüche

1. Rohrbündelreaktor (2) mit Kontaktrohren (7), die in Rohrböden (8) eingeschweißt sind und in einem zylinderförmigen Teil des Rohrbündelreaktors (2) angeordnet sind, der an seinem unteren und seinem oberen Ende jeweils von einer Haube (3) abgeschlossen ist, wobei eine Gas- und eine Flüssigphase über mindestens eine Zuführöffnung (4) in der unteren Haube (3) zugeführt und über die obere Haube (3) aus dem Reaktor abgeführt wird, **dadurch gekennzeichnet, dass** dieser eine Verteilervorrichtung (1) aufweist mit einem horizontalen Boden (5), an welchem sich die aufsteigende Gasphase zu einem Gaspolster aufstaut, und an dem horizontalen Boden (5) angeordneten vertikalen, stromaufwärts offenen Flüssigphasenführungselementen (6), die sich in Richtung der Zuführöffnung durch das sich ausbildende Gaspolster hinaus erstrecken, wobei am Umfang der Flüssigphasenführurigselemente (6) mindestens eine Öffnung (10) für die Gasphase im Bereich des sich ausbildenden Gaspolsters und mindestens eine Öffnung (11) für die Flüssigphase vorgesehen sind, und wobei die Verteilervorrichtung (1) des Weiteren so gestaltet ist, dass der horizontale Boden (5) der Rohrboden (8) des Reaktors (2) ist und die vertikalen Flüssigphasenführungselemente (6) als Verlängerungen der Kontaktrohre (7) ausgebildet sind

2. Rohrbündelreaktor (2) nach Anspruche 1, **dadurch gekennzeichnet, dass** an dem Umfang der vertikalen Flüssigphasenführungselemente (6) für die Gasphase mehrere Öffnungen (10) vertikal untereinander in einer Reihe angeordnet sind oder vertikale Schlitze.

3. Rohrbündelreaktor (2) nach Anspruch 2, **dadurch gekennzeichnet, dass** die mehreren, vertikal in einer Reihe untereinander liegenden Öffnungen (10) für die Gasphase unterschiedliche Größen (15) aufweisen.

4. Rohrbündelreaktor (2) nach einem der Ansprüche 1 bis 3, **dadurch gekennzeichnet, dass** am Umfang der vertikalen Flüssigphasenführungselemente (6) mehrere Reihen vertikal untereinander liegender Öffnungen (10) für die Gasphase angeordnet sind.

5. Rohrbündetreaktor (2) nach einem der Ansprüche 1 bis 4, **dadurch gekennzeichnet, dass** die vertikalen Flüssigphasenführungselemente (6) unterschiedliche Durchmesser aufweisen.

6. Rohrbündelreaktor (2) nach einem der Ansprüche 1 bis 5, **dadurch gekennzeichnet, dass** die vertikalen Flüssigphasenführungselemente (6) an ihrem unteren Ende (12) durch Kappen, welche schräg ausgebildet sind, Hauben, Glocken oder anderen Formen geschlossen sind.

## Claims

1. A shell-and-tube reactor (2) having contact tubes (7) which are welded into tube plates (8) and are located in a cylindrical part of the shell-and-tube reactor (2) which is closed off at its lower and its upper end respectively by an end cap (3), with a gas phase and a liquid phase being fed in via at least one feed opening (4) in the lower end cap (3) and being discharged from the reactor via the upper end cap (3), wherein said reactor has a distributor device (1) having a horizontal plate (5) at which the ascending gas phase backs up to form a gas cushion and vertical elements (6) which conduct the liquid phase and are arranged on the horizontal plate (5) and are open in the upstream direction and project outward in the direction of the feed opening through the gas cushion formed, with at least one opening (10) for the gas phase being provided on the circumference of the elements (6) which conduct the liquid phase in the region of the gas cushion formed and at least one opening (11) for the liquid phase, and the distributor device (1) being further configured so that the horizontal plate (5) is the tube plate (8) of the apparatus (2) and the vertical elements (6) which conduct the liquid phase are formed as extensions of the contact tubes (7).

2. The shell-and-tube reactor (2) according to claim 1, wherein a plurality of openings (10) are arranged vertically underneath one another in a row or vertical slits are provided for the gas phase on the circumference of the vertical elements (6) which conduct the liquid phase.

3. The shell-and-tube reactor (2) according to claim 2, wherein the plurality of openings (10) for the gas phase arranged vertically underneath one another in a row have different sizes (15).

4. The shell-and-tube reactor (2) according to any of claims 1 to 3, wherein a plurality of rows of openings (10) for the gas phase arranged vertically underneath one another are provided on the circumference of the vertical elements (6) which conduct the liquid phase.

5. The shell-and-tube reactor (2) according to any of claims 1 to 4, wherein the vertical elements (6) which conduct the liquid phase have different diameters.

6. The shell-and-tube reactor (2) according to any of claims 1 to 5, wherein the vertical elements (6) which conduct the liquid phase are closed at their bottom end (12) by caps, which are slanted, hoods, bubble caps or other shapes.

## Revendications

1. Réacteur à faisceau de tubes (2), contenant des tubes de contact (7) qui sont soudés dans des plaques tubulaires (8) et qui sont agencés dans une partie cylindrique du réacteur à faisceau de tubes (2), qui est fermé à son extrémité inférieure et à son extrémité supérieure à chaque fois par un collecteur (3), une phase gazeuse et une phase liquide étant introduites par au moins une ouverture d'alimentation (4) dans le collecteur inférieur (3) et déchargées du réacteur par le collecteur supérieur (3), **caractérisé en ce que** celui-ci comporte un dispositif de distribution (1) avec un plateau horizontal (5), sur lequel la phase gazeuse ascendante s'accumule en un coussin de gaz, et des éléments verticaux de conduite de la phase liquide (6) ouverts vers l'amont, placés sur le plateau horizontal (5), qui s'étendent dans la direction de l'ouverture d'alimentation au travers du coussin de gaz qui se forme, au moins une ouverture (10) pour la phase gazeuse dans la zone du coussin gazeux qui se forme et au moins une ouverture (11) pour la phase liquide étant prévues sur la périphérie des éléments de conduite de la phase liquide (6), et le dispositif de distribution (1) étant en outre configuré de manière à ce que le plateau horizontal (5) soit la plaque tubulaire (8) du réacteur (2) et à ce que les éléments verticaux de conduite de la phase liquide (6) soient construits sous la forme de prolongations des tubes de contact (7).

2. Réacteur à faisceau de tubes (2) selon la revendication 1, **caractérisé en ce que** des fentes verticales ou plusieurs ouvertures (10) pour la phase gazeuse sont agencées en série verticalement les unes sous les autres sur la périphérie des éléments verticaux de conduite de la phase liquide (6).

3. Réacteur à faisceau de tubes (2) selon la revendication 2, **caractérisé en ce que** les ouvertures (10) pour la phase gazeuse situées en série verticalement les unes sous les autres présentent des tailles (15) différentes.

4. Réacteur à faisceau de tubes (2) selon l'une quelconque des revendications 1 à 3, **caractérisé en ce que** plusieurs séries d'ouvertures (10) pour la phase gazeuse situées verticalement les unes sous les autres sont agencées sur la périphérie des éléments verticaux de conduite de la phase liquide (6).

5. Réacteur à faisceau de tubes (2) selon l'une quelconque des revendications 1 à 4, **caractérisé en ce que** les éléments verticaux de conduite de la phase liquide (6) présentent des diamètres différents.

6. Réacteur à faisceau de tubes (2) selon l'une quelconque des revendications 1 à 5, **caractérisé en ce que** les éléments verticaux de conduite de la phase liquide (6) sont fermés à leurs extrémités inférieures (12) par des capuchons, qui sont configurés en biais, des collecteurs, des cloches ou d'autres formes.
